Europäisches Patentamt

European Patent Office

Office européen des brevets

(11) Publication number: **0 375 117**
**A2**

## (12) EUROPEAN PATENT APPLICATION

(21) Application number: **89309936.6**

(22) Date of filing: **29.09.89**

(51) Int. Cl.5: **C09J 7/04**

(30) Priority: **23.12.88 GB 8830063**

(43) Date of publication of application:
**27.06.90 Bulletin 90/26**

(84) Designated Contracting States:
**AT BE DE FR IT NL**

(71) Applicant: **Humberstone, Stephen Norman**
**14b Queensbury Street**
**London N1 3AD(GB)**

(72) Inventor: **Humberstone, Stephen Norman**
**14b Queensbury Street**
**London N1 3AD(GB)**

(74) Representative: **Charlton, Peter John et al**
**ELKINGTON AND FIFE Beacon House 113**
**Kingsway**
**London WC2B 6PP(GB)**

(54) **Wallpaper adhesive.**

(57) The Application describes coloured wallpaper paste which dries to a colourless state.

EP 0 375 117 A2

## WALLPAPER ADHESIVE

This invention relates to a wallpaper adhesive.

The problem with conventional wallpaper adhesive is that it is colourless. This makes it difficult to see where adhesive has already been applied. This often results in areas of paper not having adhesive applied which can result in "bulging" of the wallpaper after it has bonded to the wall or ceiling. Another problem is that time, effort and adhesive are wasted by reapplying adhesive to areas that have already been covered.

According to the present invention there is provided a coloured wallpaper adhesive. Preferably, the adhesive is substantially colourless when it is dry.

This "coloured" wallpaper adhesive, enables you to see where adhesive has, or has not, been applied. This results in improved quality, improved productivity, reduced wastage and reduced eye strain. In a preferred embodiment, due to drying colourless, this adhesive does not affect the colour of the wallpaper, however pale.

If the adhesive does not dry colourless, then it should be coloured to a shade or depth which is sufficient to allow the person applying the adhesive to determine where he has applied the adhesive. In addition, the shade or depth of colour should be such that it is not visible through the wallpaper.

Example 1

All purpose wallpaper adhesive by POB (in dry powder form) could be mixed with a suitable pigment or colourant, for example, new gamboge 25 from the "New Art Powder Colour" range by Winsor and Newton. Preferably, the ratio of adhesive to colourant is 12 to 1 by weight. The powders are then mixed together in their dry state and the paste is prepared according to the manufacturers instructions. This paste tends to retain its colour.

As used herein, POB refers to the company POB Savident Ltd which is now part of the Robert McBride Company. The relevant address is Robert McBride Homecare Ltd, Riverside Hill, Hacken Lane, Darey Lever, Bolton, United Kingdom.

The address of the suppliers of the pigment is Winsor and Newton, Whitefriars Avenue, Wealdstone, Harrow, Middlesex, United Kingdom. The composition of the pigment is Organic yellow azo pigment 5%, chalk (calcium carbonate) 75%, starch (potato dextrin) 20%. A small amount of chlorinated phenol (up to 0.4%) may be added as a preservative.

Example 2

An all purpose wallpaper adhesive by POB (in dry powder form) was mixed with Phenolphthalein (an indicator supplied by the company BDH, Dorset, United Kingdom). The ratio of adhesive to indicator was 10 to 1 by weight. After the powders had been mixed in their dry state the adhesive paste was prepared according to the manufacturer's instructions.

It was found that the colour started to fade shortly after being applied to the paper. The speed of this depended on the quantity and viscosity of the paste applied as well as the paper used. Absorbent paper caused quicker fading. Typically it was a few minutes before the colour had faded to an almost colourless state and it was long before the paste was dry.

As used herein, the term "coloured" means sufficiently coloured to allow the user to easily see where the adhesive has been applied. By "colourless" is meant sufficiently clear or pale that the colour of the wallpaper is not affected.

While the above examples refer to a wallpaper adhesive from POB, it should be understood that any conventional colourless wallpaper paste can be used. Further any conventional pigment can be used provided it has the ability to mix with the wallpaper paste and to fade (if desired).

## Claims

1. A coloured wallpaper adhesive.

2. A wallpaper adhesive according to claim 1 which is substantially colourless when dry.

3. A wallpaper adhesive substantially as herein described, with reference to the Examples.